# NEW EUROPEAN PATENT SPECIFICATION

(11) **EP 0 540 203 B2**
(45) Date of publication and mention of the opposition decision: **31.10.2001**
(45) Mention of the grant of the patent: 11.12.1996
(21) Application number: 92309263.9
(22) Date of filing: 12.10.1992
(51) Int. Cl.: C09D 11/00

(54) **Non-conductive ink**
Nichtleitfähige Tinte
Encre non-conductrice

(30) Priority: 30.10.1991 GB 9123070
(43) Date of publication of application: 05.05.1993
(73) Proprietor: SERICOL LIMITED, Broadstairs, Kent CT10 2LE (GB)
(72) Inventor: Marshall, Allan Craig, Huntingdon, Cambridgeshire PE17 3QU (GB); Hudd, Alan Lionel, Nuthampstead, Hertfordshire SG8 8NG (GB)
(74) Representative: Wright, Robert Gordon McRae

(56) References cited:
- EP-A- 0 161 463
- EP-A- 0 465 039
- AU-A- 5 454 386
- DE-A- 2 349 280
- GB-A- 1 449 752
- GB-A- 2 025 996
- GB-A- 2 233 928
- US-A- 3 847 771
- US-A- 3 857 769
- US-A- 4 137 139
- US-A- 4 303 924
- Holmann:"UV and EB Curing Formulations for Printing inks, Coatings and Paints", 1984, pages 353 and360, 132 and 182
- Encyclopedia of Polymer Science and Engineering, Vol. 13, J. Wiley and Sons, 1988
- The Printing Ink Manual Leech, 4th Ed. 1988, pages 540 to 544
- Water based ink-jet: 1. Formulation, J.Imaging Science 35, June 1991, pages 179 to 188
- Design criteria and future directions in jet technologie, Coucher, Ind. Eng. Chem. Res.28, 1969, pages 1712 to 1718
- JP-60 132 767 & translation into English

## Description

### Field of the Invention

This invention relates to inks and their use in ink-jet printing.

### Background at the Invention

The concept of piezoelectric ink-jet printing is based on the movement of a piezoelectric ceramic transducer when a voltage is applied to it. When the voltage is applied, the length of the ceramic decreases, creating a void which is filled with ink. When the voltage is removed, the ceramic expands to its full length and the excess ink is repelled, ejecting a drop of ink from the printhead. A fresh drop of ink is expelled on demand.

Inks for use in piezoelectric drop-on-demand ink-jet printing traditionally comprise a mixture of fatty acids, fatty esters and oil-soluble dyes. Such inks should be slow-drying, to prevent clogging of the nozzles; this constraint results in the process being suitable only for surfaces where the ink may dry through absorption. On non-absorbent surfaces, the ink remains wet for an undesirably long period of time.

US-A-4303924 discloses a radiation-curable ink-jet ink comprising, in addition to a colourant and a conductive component, 0 to 90% of monofunctional polymerisable monomer and 5 to 80% of multifunctional polymerisable monomer. The colourant is a dye. The conductive component is oil-soluble. It is indicated that there may be 0% organic solvent, but all the given Examples contain more than 10% of such a solvent which, together with the high content of trifunctional monomer, provides a liquid phase in which the conductive component is soluble. If solvent were absent, there would be no medium for dissolution of the conductive component, and it is unlikely that the viscosity of the ink would be sufficiently low for ink-jet printing. Nevertheless, the presence of organic solvent presents the problem that the ink may dry in an open nozzle. The ink must apparently be used in an inert gas atmosphere, which is a considerable disadvantage.

EP-A-0407054 discloses an ultra-violet jet inkcomprising a curable adhesive thinned with solvents which, at least in the Examples, invariably include at least the organic solvent methyl ethyl ketone. This composition also presents the problem that the ink may dry in the nozzle.

EP-A-0465039 describes an ink-jet ink which meets the given constraints but which avoids the use of volatile, flammable, environmentally-undesirable solvents, and can be used in air. That ink comprises a colourant, a polar conductive component and, as the or a major component of at least the liquid phase, one or more polymerisable monomers in which the conductive component is soluble.

### Summary of the Invention

An ink according to the present invention is non-conductive, and is suitable for use in piezoelectric drop-on-demand systems. By comparison with the ink described in EP-A-0465039, no conductive component Is required, and the viscosity may be somewhat higher, up to 40 cP at 25°C; therefore, the novel composition may comprise a higher colourant content, providing enhanced contrast, and also an additional component that is a polymeric or other material having a thickening or other function, e.g. providing enhanced adhesion to a printed substrate.

An ink of the invention has a number of other desirable characteristics and advantages, which are summarised below. Perhaps most importantly, inks of the invention are suitable for all types of ink-jet printing, especially bubble jet or other drop-on-demand printing, and also flexographic and lithographic printing, based on nonvolatile monomer molecules. Such monomer molecules are thermally-stable, non-flammable, low viscosity liquids and exhibit low odour and low toxicity. These liquids are designed to replace all traditional volatile solvents and binders used in known ink-jet formulations. The ink may also be designed with these or a range of solvents and binders.

### Description of the Invention

An ink-jet formulation of the invention will comprise mixtures of monomers possessing different degrees of functionality, including combinations of mono, di, tri and higher functionality material. Such materials are capable of being cured by the application of UV irradiation, for which purpose the formulation contains a photoinitiator and optionally a photoactivator. Further, in addition to a colourant, the formulation may comprise conventional ingredients such as stabilisers, surfactants and wetting agents.

Upon printing, the droplet of ink is delivered to the substrate surface and converted to a dry film or dot by cross-linking or polymerising the monomer molecules by the action of an external energy source, adjacent to the printer, focused on the printing area. As an example, the extemal energy source may be a UV light source. The UV light source initiates the polymerisation process, which typically takes less than 0.5 sec. The preferred light source emits UV-A light only, e.g. at a wavelength of 315-400 nm, eliminating the need for extraction due to the production of ozone found with UV-B or UV-C light sources.

The choice of materials is wide and will depend on the application and properties required. As a means to highlight the principle, an ink-jet formulation may be designed to provide high solvent resistance by incorporating a relatively large proportion of higherfunctional monomer, thus producing, once cured, a highly cross-linked insoluble film.

A range of commercial monomers, e.g. having acrylic, vinyl or epoxy functional groups, photoinitiators and photoactivators is available and suitable for use in an ink-jet formulation, capable of polymerisation by UV light. The reaction may proceed through addition polymerisation; all reactants are converted to the final polymeric binder, leaving no by-product or trace of liquid. This reaction can proceed in two ways, either by a free-radical mechanism or by the formation of a cationic species.

Suitable monofunctional monomers that cure by a free-radical mechanism include vinyl compounds and (meth)acrylic acid esters. Specific examples are octyl acrylate, decyl acrylate, nonylphenol ethoxylate acrylate, N-vinylpyrollidone, ethyl diglycol acrylate, isobornyl acrylate, ethylhexyl acrylate, lauryl acrylate, butanediol monoacrylate, β-carboxyethyl acrylate, isobutyl acrylate, polypropylene glycol monomethacrylate and 2-hydroxyethyl methacrylate.

Suitable monofunctional monomers that cure by a cationic mechanism include vinyl ethers, monofunctional cycloaliphatic epoxides and α-epoxides. A specific example is isodecyl glycidyl ether.

It is preferred that some monofunctional monomer is present in the novel ink, since such materials have low viscosity. However, such materials will not usually be the sole polymerisable component, since some cross-linking is desirable, in order that polymerisation leads rapidly to a dry ink The amount of monofunctional monomer in the formulation is 25 to 60% by weight.

In order to provide a balance of properties, the novel ink will also include difunctional material, in an amount of up to 70%, preferably 20 to 60%, more preferably 30 to 50%, by weight of the formulation. Lower difunctional monomer contents are associated with longer ink drying times.

Suitable difunctional monomers that cure by a free-radical mechanism include difunctional (meth)acrylic acid esters, e.g. hexanediol di(meth)acrylate, tetraethylene glycol diacrylate, tripropylene glycol diacrylate, butanediol diacrylate, polyethylene glycol diacrylates and triethylene glycol dimethacrylate. Suitable difunctional monomers that cure by a cationic mechanism include triethylene glycol divinyl ether, 1,4-cyclohexanedimethanol divinyl ether, butanediol diglycidyl ether and difunctional cycloaliphatic epoxide resins.

Trifunctional monomers which may used in the invention include ethoxylated trimethylolpropane triacrylate. If present (for the reasons given above), tri- or higher functional components will usually comprise up to 10% by weight of the formulation.

The lower functional monomers comprise at least the major component of the liquid phase. The total content of polymerisable monomers in the ink will usually be 50 to 95%, e.g. at least 70% and often at least 80%, by weight of the formulation.

Suitable photoinitiators, especially for free-radical curing, include 2-hydroxy-2-methyl-1-phenylpropan-1-one, acrylic ketones, 1-hydroxycyclohexyl phenyl ketone, 2-methyl-1-[4-(methylthio)phenyl]-2-morpholinylpropanone, 2,2-dimethoxy-1,2-diphenylethan-1-one, benzophenone, isopropylthioxanthone and p-phenylbenzophenone. A photoinitiator suitable for the cationic curing mechanism is a triarylsulphonium hexafluoroantimonate salt.

Suitable photoactivators and photosynergists include ethyl 4-(dimethylamino)benzoate, N-methyldiethanolamine and 2-ethylhexyl dimethylaminobenzoate. Such materials will generally be required only for free-radical curing.

The choice of colourant for a monomer-based ink-jet ink is important, but it is possible to produce either a dye-based monomer ink or a disperse pigmented monomer-based ink of the invention. The use of pigment can provide faster curing, reflecting faster printing and enhanced solvent resistance.

A range of colours can be achieved, including black. The problem with black UV curable inks is the strong absorbence of light preventing successful curing or polymerisation. A black ink of the invention may comprise a mixture of dyes of different colours, which allows UV light at a discrete wavelength to penetrate and to initiate polymerisation, to produce a black-coloured film.

Suitable colourants include carbon black pigment, titanium dioxide pigment, ink-jet dyes including metal azo complex dyestuffs and mixtures of coloured dyestuffs. The colourant may be present in dispersion, if necessary in the form of particles coated with a material, e.g. a polymer, that is compatible with the liquid phase components.

Further, in addition to a colourant, the formulation may comprise conventional ingredients such as stabilisers, surfactants, wetting agents, polymers andviscosity modifiers.

The additional component may be a polymer incorporated in order to increase the viscosity of the monomer blend, but may also be used to improve the adhesion and mechanical properties of the printed droplet. The range of suitable polymers is vast; suitable polymers include polyvinyl butyral, nitrocellulose, polyketones, polyamides polyesters, and acrylic materials. The amount of this component in the formulation is, for example, 1 to 25%, e.g. about 5% by weight.

Alternatively, an ink-jet formulation of the invention may comprise a combination of low molecular weight multi-functional ethylenically-unsaturated or epoxy functional prepolymers with low viscosity monomers of various functionalities. Such materials are capable of being cross-linked by the application of ultraviolet light, for which purpose the formulation contains a photoinitiator and optionally photoactivator.

A wide range of commercial prepolymers, e.g. having acrylic, vinyl, thiol or epoxy functional groups, photoinitiators and photoactivators is available. Such materials are suitable for use in an ink-jet formulation, capable of polymerisation by UV light. The reaction may proceed through addition polymerisation; all the reactants are converted to the final polymeric binder, leaving no byproducts or trace of liquid. This reaction can proceed in two ways, either by a free-radical mechanism or by the formation of an ionic species.

Suitable prepolymers which may react through the free-radical polymerisation include epoxy acrylate, polyester acrylates and polyurethane acrylates. Suitable prepolymers which may cross-link through a cationic mechanism include cycloaliphatic epoxides, and multi-functional vinyl ethers.

Cationic-polymerisable formulations of the type described above may also include hydroxyl-containing materials that copolymerise with the epoxide materials acting as chain-transfer agents, improving the formulation cure speed. These materials may also be used to improve the flexibility of the final cured material.

It is also possible to combine the use of cationic and free-radical reactive materials in the same formulation. Such a hybrid system can show improved cure speed over purely cationic systems. The hybrid system also possesses better mechanical properties, e.g. with respect to adhesion and abrasion resistance, in the cured state that the free radical systems alone.

Byway of illustration of the present invention, either Example given in EP-A-0465039 is modified by substituting the KSCN by 5% polyvinyl butyral.

## Claims

1. A UV-curable, non-conductive ink for piezoelectric drop-on-demand ink-jet printing, comprising a colourant, a photoinitiator, and, as a major component of the liquid phase, one or more polymerisable monomers, the ink comprising 25 to 60% by weight of monofunctional monomer and comprising up to 70% by weight of difunctional monomer; and which is free from volatile organic solvent; the ink having a viscosity of up to 40cP at 25 °C.

2. A UV-curable, non-conductive ink according to claim 1, which comprises 20 to 60% by weight difunctional monomer.

3. A UV-curable, non-conductive ink according to claims 1 or 2, which comprises 0 to 10% tri- or higher-functional monomer.

4. A UV-curable, non-conductive ink according to claims 1, 2 or 3, which is UV-A light curable.

5. A UV-curable, non-conductive ink according to any one of the preceding claims, which comprises 1 to 10% by weight photoinitiator and 0 to 5% by weight photoactivator.

6. A UV-curable, non-conductive ink according to any one of the preceding claims, which additionally comprises a polymeric or further polymerisable component adapted to provide increased viscosity.

7. A UV-curable, non-conductive ink according to claim 6, which comprises a cationic-curable polymerisable component.

8. A UV-curable, non-conductive ink according to any one of the preceding claims, which comprises 0.5 to 5% by weight of colourant.

9. A UV-curable, non-conductive ink according to any one of the preceding claims, wherein the colourant is black.

10. A UV-curable, non-conductive ink according to any one of the preceding claims, wherein the colourant is a dispersed pigment.

11. A method of printing a substrate by piezoelectric drop-on-demand ink-jet printing, in which the ink-jet ink is defined in any preceding claim.

## Patentansprüche

1. UV-härtbare, nichtleitfähige Tinte zum Tintenstrahldrucken mit piezoelektrischer Tropfenerzeugung umfassend einen Farbstoff, einen Photoinitiator und als einen Hauptbestandteil der flüssigen Phase, ein oder mehrere polymerisierbare Monomere, wobei die Tinte 25 bis 60 Gew.-% eines monofunktionellen Monomers und bis zu 70 Gew.-% eines difunktionellen Monomers umfasst und frei ist von flüchtigem organischem Lösungsmittel, wobei die Tinte eine Viskosität von bis zu 40 cP bei 25°C aufweist.

2. UV-härtbare, nichtleitfähige Tinte nach Anspruch 1, die 20 bis 60 Gew.-% difunktionelles Monomer umfasst.

3. UV-härtbare, nichtleitfähige Tinte nach Anspruch 1 oder 2, die 0 bis 10% eines tri- oder höherfunktionellen Monomers umfasst.

4. UV-härtbare, nichtleitfähige Tinte nach Anspruch 1, 2 oder 3, die UV-A-Licht härtbar ist.

5. UV-härtbare, nichtleitfähige Tinte nach einem der vorhergehenden Ansprüche, die 1 bis 10 Gew.-% Photoinitiator und 0 bis 5 Gew.-% Photoaktivator umfasst.

6. , UV-härtbare, nichtleitfähige Tinte nach einem der vorhergehenden Ansprüche, die zusätzlich einen polymeren oder weiter polymerisierbaren Bestandteil umfasst, der sich zum Einstellen erhöhter Viskosität eignet.

7. UV-härtbare, nichtleitfähige Tinte nach Anspruch 6, die einen kationisch härtbaren, polymerisierbaren Bestandteil umfasst.

8. UV-härtbare, nichtleitfähige Tinte nach einem der vorhergehenden Ansprüche, die 0,5 bis 5 Gew.-% eines Farbstoffes umfasst.

9. UV-härtbare, nichtleitfähige Tinte nach einem der vorhergehenden Ansprüche, bei der der Farbstoff schwarz ist.

10. UV-härtbare, nichtleitfähige Tinte nach einem der vorhergehenden Ansprüche, bei der der Farbstoff ein dispergiertes Pigment ist.

11. Verfahren zum Bedrucken eines Substrates mittels Tintenstrahldruck unter piezoelektrischer Tropfenerzeugung, bei dem die Tintenstrahltinte wie in einem der vorhergehenden Ansprüche definiert ist.

## Revendications

1. Encre non - conductrice, durcissable aux UV pour l'impression à jet d'encre par projection immédiate, comprenant un colorant, un photoinitiateur et comme composant principal de la phase liquide, un ou plusieurs monomères polymérisables, l'encre comprenant 25 à 60 % en poids de monomère monofonctionnel et comprenant jusqu'à 70 % en poids de monomère difonctionnel; et qui est exempte de solvant organique volatile; l'encre ayant une viscosité jusqu'à 40 cP à 25°C.

2. Encre non - conductrice, durcissable aux UV selon la revendication 1, qui comprend 20 à 60 % en poids de monomère difonctionnel.

3. Encre non - conductrice, durcissable aux UV selon les revendications 1 ou 2, qui comprend 0 à 10 % de monomère trifonctionnel ou de fonctionnalité plus élevée.

4. Encre non - conductrice, durcissable aux UV selon les revendications 1,2 ou 3, qui est durcissable à la lumière UV-A.

5. Encre non - conductrice, durcissable aux UV selon l'une quelconque des revendications précédentes, qui comprend 1 à 10 % en poids de photoinitiateur et 0 à 5 % en poids de photoactivateur.

6. Encre non - conductrice, durcissable aux UV selon l'une quelconque des revendications précédentes, qui comprend de plus un composant polymère ou un composant pouvant encore être polymérisé apte à conférer une viscosité accrue.

7. Encre non - conductrice, durcissable aux UV selon la revendication 6, qui comprend un composant polymérisable durcissable aux cations.

8. Encre non - conductrice, durcissable aux W selon l'une quelconque des revendications précédentes, qui comprend 0,5 à 5 % en poids de colorant.

9. Encre non - conductrice, durcissable aux UV selon l'une quelconque des revendications précédentes, dans laquelle le colorant est noir.

10. Encre non - conductrice, durcissable aux UV selon l'une quelconque des revendications précédentes, dans laquelle le colorant est un pigment dispersé.

11. Procédé d'impression d'un substrat par impression à jet d'encre à projection immédiate piézoélectrique.
